# NEUE EUROPÄISCHE PATENTSCHRIFT

(11) **EP 1 541 437 B2**
(45) Veröffentlichungstag und Bekanntmachung des Hinweises auf die Entscheidung über den Einspruch: **08.06.2022**
(45) Hinweis auf die Patenterteilung: 16.08.2017
(21) Anmeldenummer: 04029046.2
(22) Anmeldetag: 08.12.2004
(51) Int. Cl.: B60T 8/88, B60T 8/32, B60T 7/04, B60T 17/08

(54) **Elektronisches Bremssystem für ein Fahrzeug**
Electronic braking system for a vehicle
Système de freinage électronique pour véhicule

(30) Priorität: 09.12.2003 DE 10357373
(43) Veröffentlichungstag der Anmeldung: 15.06.2005
(73) Patentinhaber: KNORR-BREMSE Systeme für Nutzfahrzeuge GmbH, 80809 München (DE)
(72) Erfinder: Hecker, Falk Dr., 71706 Markgröningen (DE); Herges, Michael, 70825 Korntal-Münchingen (DE); Gücker, Ulrich, 71701 Schwieberdingen (DE); Klement, Roland, 82407 Haunshofen (DE)
(74) Vertreter: Wende, Christian Werner

(56) Entgegenhaltungen:
- EP-A- 0 467 112
- DE-A1- 4 339 570
- DE-A1- 19 510 525
- DE-A1- 19 634 567
- DE-A1- 19 732 229
- DE-A1- 19 755 431
- DE-A1- 19 832 167
- DE-A1- 19 853 036
- DE-A1- 19 954 284
- DE-B4- 10 043 189
- DE-C1- 19 521 175
- DE-C2- 19 861 095

## Beschreibung

Die Erfindung betrifft ein elektronisches Bremssystem für ein Fahrzeug nach dem Oberbegriff von Anspruch 1. Ein solches Bremssystem ist aus DE 43 39 570 A1 bekannt. Weitere elektronische Bremssysteme sind in der DE 196 34 567 A1 und der DE 197 08 832 A1 beschrieben. In der EP 1 283 139 A2 ist eine Energieversorgungseinrichtung für ein elektronisches Bremssystem für ein Fahrzeug aufgezeigt.

De 197 55 431 A1 beschreibt ein elektronisches Bremssystem, bei dem ein elektrisches Bremsanforderungssignal über den elektrischen Kanal eines Bremswertgebers und ein pneumatisches Bremsanforderungssignal über den pneumatischen Kanal des Bremswertgebers erzeugt werden. DE 195 21 175 C1 beschreibt ein elektronisches Bremssystem, bei dem eine Bremsbestätigungseinrichtung mi8t einem Bremsanforderungsmittel vorgesehen ist. DE 100 43 189 B4 offenbar ein elektrisches Bremssystem.

Nachteilig an den elektronischen Bremssystemen nach dem Stand der Technik sind der komplizierte Aufbau und die damit verbundenen Produktionskosten.

Der Erfindung liegt die Aufgabe zugrunde, ein elektronisches Bremssystem für ein Fahrzeug zu schaffen, das sich durch einen einfachen Aufbau bei mindestens gleicher Zuverlässigkeit auszeichnet.

Diese Aufgabe wird gelöst durch die Merkmale des Anspruchs 1. Vorteilhafte Ausgestaltungen ergeben sich aus den Unteransprüchen.

Das erfindungsgemäße elektronische Bremssystem für ein Fahrzeug weist mindestens zwei Bremskreise auf, wenigstens einen ersten Bremskreis und einen zweiten Bremskreis. Gesetzlich gefordert sind zwei unabhängige Betriebsbremskreise. Die meisten Fahrzeuge haben aus Kostengründen genau zwei Betriebsbremskreise. Es sind einem jeden Bremskreis eine oder mehrere Achsen mit den dort befindlichen Radbremsen zugeordnet. Dabei ist jeweils einem Betriebsbremskreis eine Bremskreissteuerung zugeordnet, welche die Bremswirkung der Radbremsen des Betriebsbremskreises bestimmt. Allen Bremskreissteuerungen ist ein Zentralsteuergerät übergeordnet, das die Gesamtbremswirkung der Betriebsbremse vorgibt, die Bremskraftverteilung zwischen den Achsen des Fahrzeugs und gegebenenfalls zwischen Zugfahrzeug und Anhänger regelt sowie gegebenenfalls auch noch weitere Funktionen wie das Einlesen weiterer Sensoren, Ansteuern weiterer Aktoren wie zum Beispiel der Dauerbremse oder eine Fahrdynamikregelung ausführt. Dieses Zentralsteuergerät enthält vorzugsweise auch eine der Bremskreissteuerungen (zweite Bremskreissteuerung des zweiten Bremskreises).

Erfindungsgemäß kann bei Ausfall des Zentralsteuergeräts oder bei erkanntem Fehler die andere Bremskreissteuerung (erste Bremskreissteuerung des ersten Bremskreises) autark vom Zentralsteuergerät die Ansteuerung ihres ersten Bremskreises wahrnehmen. Ebenso kann bei Ausfall dieser autarken ersten Bremskreissteuerung das Zentralsteuergerät den verbliebenen zweiten Bremskreis weiterhin betreiben. Dies bietet ohne erhebliche Mehrkosten eine Steigerung der Sicherheit mit dem Vorteil, eine Notbremswirkung zu gewährleisten, selbst wenn das Zentralsteuergerät oder die autarke Bremskreissteuerung komplett ausfallen würde. Dabei muss die autarke erste Bremskreissteuerung in ihrer einfachsten Ausführung lediglich ein die Bremsanforderung des Fahrers repräsentierendes Signal einlesen und verarbeiten können, sowie unabhängig vom Zentralsteuergerät mit elektrischer Energie versorgt werden.

Da bei dieser Schaltung eine im Fehlerfall eventuell unkontrolliert agierende autarken ersten Bremskreissteuerung vom Zentralsteuergerät nicht durch Abschalten der Versorgungsspannung abgeschaltet werden kann, muß die autarke erste Bremskreissteuerung einen solchen Fehler sicher erkennen und sich definiert selbst abschalten (Fail-Silent-Verhalten).

In einer vorteilhaften Ausgestaltung der Erfindung ist jedem Bremskreis eine autonome Spannungsversorgung zugeordnet. Damit kann der gesetzlichen Forderung, dass ein Bremssystem als System zweier vollständig von einander unabhängiger Bremskreise aufgebaut sein muss, auch mit einer rein elektrischen Bremssteuerung Folge geleistet werden. Eine mechanisch-pneumatische Bremssteuerung als zweiter Kreis, die bei Ausfall der elektronischen Bremssteuerung ein Rückfallsystem bildet, ist dann nicht mehr erforderlich. Dies bietet insbesondere bei Nutzfahrzeugen den Vorteil, dass pneumatische Verrohrungen und Leitungen zur Fahrerkabine entfallen können. Des Weiteren entfallen viele Bauteile in dem einer pneumatischen Bremssteuerung eigenen Fußbremsmodul.

Vorzugsweise weist jede autonome Spannungsversorgung eine Batterie oder sonstige elektrische Energiequelle (z.B. Doppelschichtkondensatoren, Brennstoffzellen) auf, die ausschließlich den zugeordneten Bremskreis speist. In einer vorteilhaften Ausgestaltung kann z.B. mit lediglich zwei Bleibatterien von wenigen Ah Fassungsvermögen die gesetzliche Forderung bei Ausfall der zentralen Nutzkraftfahrzeugstromversorgung erfüllt werden. Die Batterien müssen sicher von einander und vom Bordnetz getrennt werden können. Ein Fehler in einer elektrischen Energiequelle oder dem Bordnetz darf niemals zum Ausfall beider elektrischer Energiequellen oder beider daran angeschlossener Bremskreissteuerungen führen.

Vorteilhafter Weise werden die Spannungsversorgungen von einer Überwachungselektronik auf ihren Zustand überwacht. Die Spannungsversorgungen weisen vorzugsweise Batterien auf, deren Strom-, Spannungs- und/oder Temperaturverläufe von einer Überwachungselektronik aufgenommen werden. Eine Schaltung sorgt für eine optimale Beladung der Batterien, sowie gegebenenfalls die Ermittlung ihres aktuellen Lade- und/oder "Gesundheits-"Zustandes.

Erfindungsgemäß umfasst das elektronische Bremssystem ein Bremspedal oder ein gleich wirkendes Bremsanforderungsaufnahmegerät, das zwei autonome Bremsanforderungsaufnahmemittel aufweist. Jedes der Bremsanforderungsaufnahmemittel ist dabei vorteilhafter Weise als doppelter Weg-, Winkel- oder Kraftsensor oder als einzelner Weg- bzw. Winkel- und ein einzelner Kraftsensor ausbildet. Auf diese Art ist die notwendige Erkennung von Fehlern innerhalb der Aufnahmemittel gewährleistet. Als Weg- bzw. Winkelsensoren kommen beispielsweise Potentiometer, Hall-Sensoren, magnetoresistive Sensoren oder Tauchspulen in Betracht.

Erfindungsgemäß ist eines der beiden Aufnahmemittel dabei mit dem Zentralsteuergerät verbunden, das andere mit der autarken ersten Bremskreissteuerung.

Im Normalbetrieb erfolgt die Berechnung der Sollwerte für die Ansteuerung der Bremskreise über das Zentralsteuergerät. Bei Ausfall des Zentralsteuergeräts, wenn dieses einen Fehler meldet oder die autarke erste Bremskreissteuerung Fehler in den Signalen vom Zentralsteuergerät erkennt, übernimmt die autarke erste Bremskreissteuerung die Berechnung der Sollwerte für die Ansteuerung ihres Kreises zumindest nach Maßgabe der Signale des mit ihr verbundenen Bremsanforderungsaufnahmemittels selbst.

Sowohl das Zentralsteuergerät als auch die autarke erste Bremskreissteuerung enthalten jeweils bevorzugt zwei Rechner, die sich gegenseitig überwachen, wobei bei erkannter Fehlfunktion im einen Rechner der andere das gesamte Zentralsteuergerät, bzw. die gesamte autarke erste Bremskreissteuerung abschaltet (Fail-Silent-Verhalten). Dadurch kann keine die Bremskreissteuerung im Falle eines Fehlers in einem ihrer Rechner sicherheitskritische, falsche Eingriffe ausführen.

Ein Ausfall einer der Bremskreise wird beispielsweise dem Fahrer von den intakten Teilen des Bremssystems oder anderen im Fahrzeug vorhandenen Einrichtungen angezeigt.
Im Weiteren weist das elektronische Bremssystem vorteilhaft eine Überwachungseinrichtung für die Bremsanforderungsaufnahmemittel auf. Ein Bremsanforderungsaufnahmemittel kann beispielsweise anhand der per CAN übermittelten Werte des anderen Bremsanforderungsaufnahmemittels überwacht werden.

Das weist elektronische Bremssystem ein Anhängersteuermodul auf, das einerseits mit dem Zentralsteuergerät elektrisch, andererseits mit der autarken Bremskreissteuerung elektrisch und/oder pneumatisch verbunden ist. Damit wird in einfacher Weise der gesetzlichen Forderung nach einer zweikreisigen Ansteuerung des Anhängers bzw. Aufliegers Rechnung getragen.

Bei moderneren Anhängern mit einem elektronischen Bremssystem (TEBS) kann zusätzlich zur pneumatischen Ansteuerung des Anhängers auch noch eine elektrische Ansteuerung vorgesehen werden, insbesondere über CAN ISO 11992 oder einem Nachfolgesystem. In einer vorteilhaften Ausgestaltung der Erfindung wird die elektrische Schnittstelle zum Anhänger am Zentralsteuergerät oder an der autarken Bremskreissteuerung angeschlossen.

Zukünftig sind auch Bremssysteme im Hänger vorgesehen, die ohne pneumatische Bremssollwertübermittlung vom Zugfahrzeug auskommen. Deren elektrisches Ansteuersignal muß jedoch zweikreisig gebildet werden. Deshalb sieht eine besonders vorteilhafte Ausgestaltung der Erfindung vor, dass sowohl das Zentralsteuergerät als auch die autarke Bremskreissteuerung an der Bildung des Bremsensollwertes, der über die elektrische Schnittstelle zum Hänger gesendet wird, beteiligt sind.

In einer vorteilhaften Ausgestaltung der Erfindung kann das Zentralsteuergerät des elektronischen Bremssystems mit weiteren elektronischen Geräten, beispielsweise einem zentralen Bordrechner kommunizieren. Diese Kommunikation kann beispielsweise über einen genormten CAN-Bus erfolgen.

Um eine sichere Bremsung mit hoher Spurtreue und hinreichenden Seitenführungskräften auch bei einem Ausfall des Zentralsteuergeräts zu gewährleisten, kann die autarke Bremskreissteuerung vorteilhafter Weise eine eigene ABS-Regelung aufweisen.

In einer bevorzugten Ausgestaltung der Erfindung weist das elektronische Bremssystem redundante Datenübertragungsleitungen auf. Vorzugsweise werden diese räumlich von einander getrennt geführt.

In einer bevorzugten Ausgestaltung der Erfindung ist das elektronische Bremssystem derart aufgebaut, dass im Fehlerfall eine Datenübermittlung über eine Stromversorgungsleitung erfolgen kann (PLC-Kommunikation). Dabei ist zwar im Allgemeinen nur eine geringere Datenübertragungsrate möglich, die notwendigsten Befehle und Informationen können aber sicher übermittelt werden. Durch diese Technik wird eine gewisse Redundanz der Datenübertragung gewährleistet, ohne in zusätzliche Leitungen investieren zu müssen.

Vorteilhafter Weise weist mindestens ein Bremskreis des elektronischen Bremssystems eine redundante Kommunikationsleitung zur Zentralsteuereinheit auf. Fällt eine Kommunikationsleitung aus, wird sie durch die redundante Kommunikationsleitung ersetzt. Auf diese Wiese bleibt bei lediglich einem Schaden in der Kommunikationsleitung die volle Funktionalität erhalten.

Eine andere vorteilhafte Möglichkeit, Redundanz in der Kommunikation zu realisieren, besteht in einer direkten Datenübertragungsleitung zwischen den Bremskreisen, sodass sich eine Ringstruktur ergibt, in der die Daten auf zwei Wegen ihr Ziel finden können und bei einem Schaden in einer Verbindungsleitung den entgegengesetzten Weg nehmen.

In einer vorteilhaften Ausgestaltung der Erfindung sind das Zentralsteuergerät und/oder die autarke Bremskreissteuerung derart aufgebaut, dass sie auf eine Eingabe eines Parkbremssignals hin auch die Feststellbremse ansteuern. Dies bietet bei einem Nutzfahrzeug gegenüber einer konventionellen pneumatischen Parkbremse den Vorzug, dass auch die pneumatischen Leitungen der Parkbremse aus dem Führerhaus des Nutzfahrzeuges entfallen können.

In einer besonderen Variante hierzu ist zumindest eine Bremskreissteuerung derart aufgebaut, dass sie auf eine direkte Eingabe eines Parkbremssignals die Radbremse zuspannt.

In einer hierzu besonderen Ausgestaltung der Erfindung werden die Radbremsen mit den Mitteln der Betriebsbremse zugespannt und ein zusätzlicher, von der Bremskreissteuerung steuerbarer Aktuator hält die Radbremsen mit rein mechanischen Mitteln im zugespannten Zustand.

In einer zu dieser Variante alternativen Ausgestaltung ist zumindest eine der beiden Bremskreissteuerungen derart aufgebaut, dass sie ein Ventil ansteuert, das seinerseits Federspeicherbremszylinder an mindestens einer der Achsen des anderen Bremskreises be- oder entlüftet. Damit sind auch bei einem Ausfall der jeweils anderen Bremskreissteuerung die Radbremsen der ausgefallenen Bremskreissteuerung ansteuerbar.

In einer anderen Ausgestaltung der Erfindung versorgt der Bremskreis der autarken Bremskreissteuerung die weiteren Bremskreise redundant mit Spannung. Bei Ausfall des Zentralsteuergeräts werden dann die weiteren Bremskreise von der autarken Bremskreissteuerung angesteuert. Dies entspricht zwar nicht der derzeitigen gesetzlichen Forderung der Kreistrennung, führt aber zu einer besseren Bremswirkung bei Ausfall eines Kreises, die sich bei geänderter Gesetzeslage als vorteilhaft erweist.

In einer vorteilhaften Ausgestaltung der Erfindung ist das Zentralsteuergerät in einem zentralen Bordrechner integriert. Dadurch werden Bauraum und störungsanfällige Kommunikationsleitungen eingespart, und elektronische Bauelemente wie z. B. eine Spannungsversorgung der Elektronik können gemeinsam verwendet werden.

Vorteilhafter Weise weist das elektronische Bremssystem eine zusätzliche Kommunikationsverbindung von der autarken Bremskreissteuerung zu anderen Fahrzeugsystemen auf. Auf diese Art werden auch bei einem Ausfall des Zentralsteuergeräts Daten mit anderen Fahrzeugsystemen ausgetauscht, beispielsweise um eine Wammeldung an den Fahrer zu ermöglichen oder höhere Funktionen, beispielsweise eine Dauerbremsansteuerung oder eine Beeinflussung des Antriebs zu Geschwindigkeitsbegrenzung auszuführen.

In einer Ausgestaltung der Erfindung wirkt der Bremskreis der autarken Bremskreissteuerung auf die Vorderachse, bzw. die Vorderachsen. Dies ist wegen der kurzen Kabellängen von dem Bremspedal im Führerhaus zur Achse vorteilhaft. Die Gefahr der Signalverfälschung ist damit geringer als bei einem Kabel zur Hinterachse.

Die dem Zentralsteuergerät bzw. der autarken Bremskreissteuerung untergeordneten Mittel zur Erzeugung des Bremsdrucks sind vorzugsweise als intelligente Druckregelmodule ausgebildet, die zu den zugeordneten Reibungsbremsen an den Rädern den von der Bremskreissteuerung ermittelten Sollbremswirkung entsprechenden Bremsdruck einregeln.
Diese können als Einkanal- oder Zweikanaldruckregelmodule ausgeführt sein. Jeder Kanal der Druckregelmodule kann eine oder mehrere Reibungsbremsen steuern. Eines der Druckregelmodule ist dergestalt ausgebildet, dass seine Steuerelektronik auch die Funktion der autarken Bremskreissteuerung ausführt.

Vorteilhafter Weise sind zumindest rudimentäre ABS-Algorithmen in den Druckregelmodulen oder in der autarken Bremskreissteuerung integriert, so dass bei Ausfall von anderen Druckregelmodulen, Bremskreissteuerungen oder des Zentralsteuergerätes noch eine ABS-Funktionalität an der oder den unbeeinträchtigten Achsen möglich ist.

In einer Zeichnung ist ein Ausführungsbeispiel der Erfindung dargestellt.

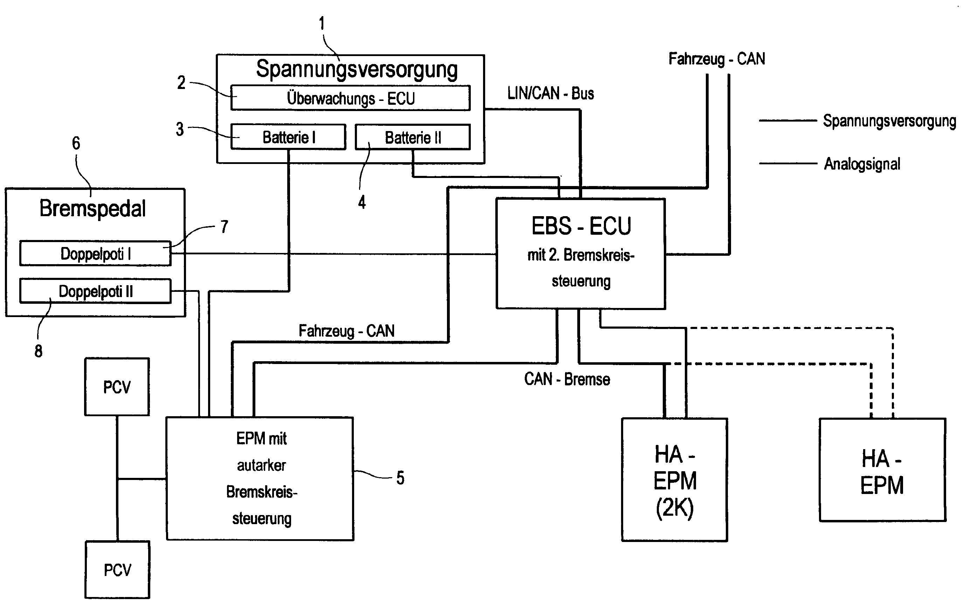

Die einzige Figur zeigt einen schematischen Aufbau eines erfindungsgemäßen elektronischen Bremssystems. Eine Spannungsversorgung 1 mit einer elektronischen Kontrolleinheit 2 zu ihrer Überwachung umfasst zwei galvanisch von einander getrennte Batterien 3, 4. Die erste Batterie 3 versorgt eine autarke Bremskreissteuerung 5, die zweite ein Zentralsteuergerät EBS-ECU eines elektronischen Bremssystems. Ein Zwei-Kanal Hinterachs-Druckregelmodul HA-EPM (2K) und optional ein weiteres Hinterachs-Druckregelmodul HA-EPM wird über das Zentralsteuergerät EBS-ECU des elektronischen Bremssystems von der zweiten Batterie mit Spannung versorgt. Ein Bremspedal 6 verfügt zur Aufnahme von einem Bremsanforderungssignal über zwei Doppelpotentiometer 7, 8. Das Zentralsteuergerät EBS-ECU fordert über eine Analogleitung vom dem ersten Doppelpotentiometer 7 ein analoges Signal einer Bremsanforderung ab und verarbeitet es zu elektrischen Ansteuerungssignalen für die, in einen Druckregelmodul integrierte, autarke Bremskreissteuerung 5, das Zwei-Kanal Hinterachs-Druckregelmodul HA-EPM (2K) und das optionale Hinterachs-Druckregelmodul HA-EPM, die über einen CAN-Bus übermittelt werden. Im Falle eines ABS-Eingriffs an der Vorderachse steuert die autarke Bremskreissteuerung 5 zu schnelleren Drucksteuerung Drucksteuerventile PCV an. Über eine CAN-Bus-Datenleitung ist das Zentralsteuergerät EBS-ECU mit der elektronischen Kontrolleinheit 2 zur Überwachung der Spannungsversorgung 1 verbunden.

Bei Ausfall der elektronischen Kontrolleinheit EBS-ECU benutzt die autarke Bremskreissteuerung 5 das über eine weitere, direkte Analogleitung vom zweiten Doppelpotentiometer 8 eingelesene, analoge Signal als Bremsanforderung und verarbeitet es, gegebenenfalls zusammen mit anderen Informationen zu einem Solldruck, der mit dem integrierten Druckregelmodul, im ABS- Fall auch unter Zuhilfenahme der Drucksteuerventile, physikalisch umgesetzt und an die Bremszylinder der Radbremsen ausgegeben wird. Die von der autarken Bremskreissteuerung 5 angesteuerten Fahrzeugbremsen, in der Regel die der Vorderachse, sind daher auch bei Ausfall des Zentralsteuergeräts EBS-ECU noch betätigbar. Wegen ihrer eigenen Spannungsversorgung kann die autarke Bremskreissteuerung 5 im Fehlerfall nicht vom Zentralsteuergerät EBS-ECU von der Versorgungsspannung abgeschaltet werden. Die autarke Bremskreissteuerung 5 ist derart aufgebaut, dass sie einen solchen Fehler sicher erkennt und sich definiert selbst abschaltet (Fail-Silent-Verhalten).

Sowohl das Zentralsteuergerät EBS-ECU als auch die autarke Bremskreissteuerung 5 sind über eigene Datenleitungen und einem Fahrzeug-CAN-Bus mit weiteren, nicht dargestellten Fahrzeugsteuereinheiten wie beispielsweise einem zentralen Bordrechner verbunden.

### Bezugszeichen

- 1: Spannungsversorgung
- 2: elektronische Kontrolleinheit
- 3: erste Batterie
- 4: zweite Batterie
- 5: in ein Druckregelmodul integrierte autarke Bremskreissteuerung
- EBS-ECU: Zentralsteuergerät
- HA-EPM (2K): Zwei-Kanal Hinterachs-Druckregelmodul
- HA-EPM: Hinterachs-Druckregelmodul
- 6: Bremspedal
- 7: Doppelpotentiometer
- 8: Doppelpotentiometer
- PCV: Druckregelventil

## Patentansprüche

1. Elektronisches Bremssystem für ein Fahrzeug mit mindestens zwei Bremskreisen, wenigstens einem ersten Bremskreis und einem zweiten Bremskreis, wobei jeweils einem Bremskreis eine Bremskreissteuerung (5, EBS-ECU) zugeordnet ist, und mit einem Zentralsteuergerät (EBS-ECU) für alle Bremskreise, sowie mit einem Bremspedal (6) oder einem gleich wirkenden Bremsanforderungsaufnahmegerät, das zwei autonome Bremsanforderungsaufnahmemittel (7, 8) aufweist, wobei bei Ausfall des Zentralsteuergeräts (EBS-ECU) oder bei erkanntem Fehler des Zentralsteuergeräts (EBS-ECU) eine erste Bremskreissteuerung (5) der Bremskreissteuerungen (5, EBS-ECU) autark vom Zentralsteuergerät (EBS-ECU) die Ansteuerung eines Bremskreises wahrnehmen kann, **dadurch gekennzeichnet, dass** jedes der Bremsanforderungsaufnahmemittel als doppelter Weg-, Winkel-, oder Kraftsensor oder als einzelner Weg- oder Winkelsensor und ein Kraftsensor ausgebildet ist und die autarke erste Bremskreissteuerung (5) unabhängig vom Zentralsteuergerät (EBS-ECU) mit elektrischer Energie versorgt wird und dass ein erstes Bremsanforderungsaufnahmemittel (7) der beiden autonomen Bremsanforderungsaufnahmemittel (7, 8) mit dem Zentralsteuergerät (EBS-ECU) und ein zweites Bremsanforderungsaufnahmemittel (8) der beiden autonomen Bremsanforderungsaufnahmemittel (7, 8) mit der autarken ersten Bremskreissteuerung (5) verbunden ist, wobei die Ansteuerung der Bremskreise im Normalbetrieb über das Zentralsteuergerät (EBSECU) erfolgt und bei Ausfall des Zentralsteuergeräts (EBS-ECU) oder bei erkanntem Fehler des Zentralsteuergeräts (EBS-ECU) die autarke erste Bremskreissteuerung (5) direkt die Signale des zweiten intakten Bremsanforderungsaufnahmemittels (7, 8) zur autonomen Berechnung von Sollvorgaben für die Ansteuerung ihres ersten Bremskreises verarbeitet, wobei das elektronische Bremssystem ein Anhängerkontrollmodul aufweist, das einerseits mit dem Zentralsteuergerät (EBS-ECU) elektrisch andererseits mit der autarken Bremskreissteuerung (5) elektrisch und/oder pneumatisch verbunden ist.

2. Elektronisches Bremssystem nach Anspruch 1, **dadurch gekennzeichnet, dass** das Zentralsteuergerät (EBS-ECU) auch die Aufgabe der Bremskreissteuerung des zweiten Bremskreises der beiden Bremskreise ausführt.

3. Elektronisches Bremssystem nach einem der vorstehenden Ansprüche, **dadurch gekennzeichnet, dass** dem Zentralsteuergerät (EBS-ECU) oder der autarken ersten Bremskreissteuerung (5) untergeordnete Mittel zur Erzeugung des Bremsdrucks als intelligente Druckregelmodule ausgebildet sind.

4. Elektronisches Bremssystem nach Anspruch 2, **dadurch gekennzeichnet, dass** die autarke erste Bremskreissteuerung (5) sowie eines der diesem ersten Bremskreis zugeordneten Druckregelmodule zu einer baulichen Einheit zusammengefasst sind.

5. Elektronisches Bremssystem nach Anspruch 4, **dadurch gekennzeichnet, dass** die autarke erste Bremskreissteuerung (5) sowie eine intelligente Steuerung des mit ihr zu einer baulichen Einheit zusammengefassten Druckregelmoduls von einer gemeinsamen, ebenfalls in der baulichen Einheit enthaltenen elektronischen Schaltung ausgeführt wird.

6. Elektronisches Bremssystem nach einem der vorstehenden Ansprüche, **dadurch gekennzeichnet, dass** die autarke erste Bremskreissteuerung (5) so ausgelegt ist, dass sie sich im Falle eines die Funktion beeinträchtigenden Fehlers selbst abschaltet (Fail-silent Verhalten).

7. Elektronisches Bremssystem nach einem der vorstehenden Ansprüche, **dadurch gekennzeichnet, dass** jedem Bremskreis eine autonome Spannungsversorgung (3,4) zugeordnet ist.

8. Elektronisches Bremssystem nach Anspruch 7, **dadurch gekennzeichnet, dass** jede autonome Spannungsversorgung (3, 4) eine Batterie (3, 4) aufweist, die ausschließlich den zugeordneten Bremskreis speist.

9. Elektronisches Bremssystem nach Anspruch 7 oder 8, **dadurch gekennzeichnet, dass** die Spannungsversorgungen (3, 4) von einer Überwachungselektronik (2) auf ihren Zustand überwacht werden.

10. Elektronisches Bremssystem nach Anspruch 9, **dadurch gekennzeichnet, dass** die Spannungsversorgungen (3, 4) Batterien (3, 4) aufweisen und die Überwachungselektronik (2) deren Strom-, Spannungs- und Temperaturverläufe aufnimmt und eine Schaltung zur optimalen Beladung der Batterien (3, 4) aufweist.

11. Elektronisches Bremssystem nach einem der vorhergehenden Ansprüche, **dadurch gekennzeichnet, dass** die Bremsanforderungsaufnahmemittel (7, 8) so gestaltet sind, dass sicher erkannt werden kann, ob ein die Funktion beeinträchtigender Fehler vorliegt.

12. Elektronisches Bremssystem nach Anspruch 11, **dadurch gekennzeichnet, dass** es eine Überwachungseinrichtung (2) für jedes der Bremsanforderungsaufnahmemittel (7, 8) aufweist.

13. Elektronisches Bremssystem nach einem der vorstehenden Ansprüche, **dadurch gekennzeichnet, dass** im Fehlerfall eine Datenübermittlung über die Stromversorgungsleitungen erfolgen kann.

14. Elektronisches Bremssystem nach Anspruch 1, **dadurch gekennzeichnet, dass** das Anhängerkontrollmodul im Normalbetrieb über das Zentralsteuergerät (EBS-ECU) elektrisch und bei Ausfall der Elektronik über die autarke erste Bremskreissteuerung (5) pneumatisch angesteuert wird.

15. Elektronisches Bremssystem nach einem der vorstehenden Ansprüche, **dadurch gekennzeichnet, dass** das Zentralsteuergerät (EBS-ECU) mit weiteren elektronischen Geräten über einen CAN-Bus kommunizieren kann.

16. Elektronisches Bremssystem nach einem der vorstehenden Ansprüche, **dadurch gekennzeichnet, dass** die autarke erste Bremskreissteuerung (5) eine eigene ABS-Regelung aufweist.

17. Elektronisches Bremssystem nach einem der vorstehenden Ansprüche, **dadurch gekennzeichnet, dass** es redundante Datenübertragungsleitungen aufweist.

18. Elektronisches Bremssystem nach Anspruch 17, **dadurch gekennzeichnet, dass** redundante Datenübertragungsleitungen räumlich von einander getrennt geführt werden.

19. Elektronisches Bremssystem nach einem der vorstehenden Ansprüche, **dadurch gekennzeichnet, dass** mindestens ein Bremskreis eine redundante Kommunikationsleitung zu dem Zentralsteuergerät (EBS-ECU) aufweist.

20. Elektronisches Bremssystem nach einem der vorstehenden Ansprüche, **dadurch gekennzeichnet, dass** eine direkte Datenübertragungsleitung zwischen den Bremskreisen eine redundante Kommunikation ermöglicht.

21. Elektronisches Bremssystem nach einem der vorstehenden Ansprüche, **dadurch gekennzeichnet, dass** das Zentralsteuergerät (EBS-ECU) und/oder die autarke erste Bremskreissteuerung (5) derart aufgebaut sind, dass sie auf eine Eingabe eines Parkbremssignals hin die Feststellbremse ansteuern.

22. Elektronisches Bremssystem nach einem der vorstehenden Ansprüche, **dadurch gekennzeichnet, dass** zumindest eine Bremskreissteuerung (5, EBS-ECU) derart aufgebaut ist, dass sie auf eine Eingabe eines Parkbremssignals mittels der Betriebsbremsen die Radbremse zuspannt.

23. Elektronisches Bremssystem nach Anspruch 22, **dadurch gekennzeichnet, dass** ein zusätzlicher steuerbarer Aktuator die Radbremse im zugespannten Zustand halten kann.

24. Elektronisches Bremssystem nach Anspruch 23, **dadurch gekennzeichnet, dass** der zusätzliche Aktuator von der der entsprechenden Radbremse zugeordneten Bremskreissteuerung (5, EBS-ECU) angesteuert wird.

25. Elektronisches Bremssystem nach Anspruch 21 oder 22, **dadurch gekennzeichnet, dass** zumindest eine Bremskreissteuerung (5, EBS-ECU) ein Ventil ansteuert, das seinerseits Federspeicherbremszylinder be- oder entlüftet.

26. Elektronisches Bremssystem nach einem der vorstehenden Ansprüche, **dadurch gekennzeichnet, dass** der Bremskreis der autarken ersten Bremskreissteuerung (5) die weiteren Bremskreise redundant mit Spannung versorgt und bei Ausfall des Zentralsteuergeräts (EBS-ECU) die weiteren Bremskreise von der autarken ersten Bremskreissteuerung (5) angesteuert werden.

27. Elektronisches Bremssystem nach einem der vorstehenden Ansprüche, **dadurch gekennzeichnet, dass** das Zentralsteuergerät (EBS-ECU) in einem zentralen Bordrechner integriert ist.

28. Elektronisches Bremssystem nach einem der vorstehenden Ansprüche, **dadurch gekennzeichnet, dass** es eine zusätzliche Kommunikationsverbindung von der autarken ersten Bremskreissteuerung (5) zu anderen Fahrzeugsystemen, insbesondere zu einem zentralen Bordrechner aufweist.

29. Elektronisches Bremssystem nach einem der vorstehenden Ansprüche, **dadurch gekennzeichnet, dass** der Bremskreis der autarken ersten Bremskreissteuerung (5) auf eine Vorderachse wirkt.

30. Elektronisches Bremssystem nach einem der vorstehenden Ansprüche, **dadurch gekennzeichnet, dass** ABS-Algorithmen in der autarken ersten Bremskreissteuerung (5) integriert sind.

## Claims

1. Electronic braking system for a motor vehicle having at least two brake circuits, at least one first brake circuit and a second brake circuit, wherein a brake circuit controller (5, EBS-ECU) is assigned to each brake circuit, and having a central control unit (EBS-ECU) for all brake circuits, and also having a brake pedal (6) or a similarly acting brake demand recording unit, which has two autonomous brake demand recording means (7, 8), wherein, in the event of failure of the central control unit (EBS-ECU) or a detected fault in the central control unit (EBS-ECU), a first brake circuit controller (5) of the brake circuit controllers (5, EBS-ECU) can carry out, in a stand-alone manner with respect to the central control unit (EBS-ECU), the control of a brake circuit,
**characterised in that**
each of the brake demand recording means is designed as a dual distance, angle or force sensor, or as a single distance or angle sensor and a force sensor, and the stand-alone first brake circuit controller (5) is supplied with electrical energy independently of the central control unit (EBS-ECU), and
a first brake demand recording means (7) of the two autonomous brake demand recording means (7, 8) is connected to the central control unit (EBS-ECU) and a second brake demand recording means (8) of the two autonomous brake demand recording means (7, 8) is connected to the stand-alone first brake circuit controller (5), wherein the control of the brake circuits is realised in normal operation via the central control unit (EBS-ECU) and, in the event of a failure of the central control unit (EBS-ECU) or a detected fault in the central control unit (EBS-ECU), the stand-alone first brake circuit controller (5) directly processes the signals of the second intact brake demand recording means (7, 8) for the autonomous calculation of predefined targets for the control of its first brake circuit,
wherein the electronic braking system has a trailer control module, which is connected on the one hand electrically to the central control unit (EBS-ECU) and on the other hand electrically and / or pneumatically to the stand-alone brake circuit controller (5).

2. Electronic braking system according to claim 1, **characterised in that** the central control unit (EBS-ECU) also performs the task of the brake circuit control of the second brake circuit of the two brake circuits.

3. Electronic braking system according to one of the preceding claims, **characterised in that** means, subordinate to the central control unit (EBS-ECU) or to the stand-alone first brake circuit controller (5), for generating the brake pressure, are designed as intelligent pressure control modules.

4. Electronic braking system according to claim 2, **characterised in that** the stand-alone first brake circuit controller (5) and also one of the pressure control modules assigned to this first brake circuit are put together to form one structural unit.

5. Electronic braking system according to claim 4, **characterised in that** the stand-alone first brake circuit controller (5) and an intelligent controller of the pressure control module put together therewith to form one structural unit are executed by a common, electronic circuit also contained in the structural unit.

6. Electronic braking system according to one of the preceding claims, **characterised in that** the stand-alone first brake circuit controller (5) is designed so that it switches itself off in the event of a fault impairing the function (fail-silent behaviour).

7. Electronic braking system according to one of the preceding claims, **characterised in that** an autonomous voltage supply (3, 4) is assigned to each brake circuit.

8. Electronic braking system according to claim 7,
**characterised in that** each autonomous voltage supply (3, 4) has a battery (3, 4), which supplies exclusively the assigned brake circuit.

9. Electronic braking system according to claim 7 or 8,
**characterised in that** the voltage supplies (3, 4) are monitored with respect to their state by an electronic monitoring system (2).

10. Electronic braking system according to claim 9,
**characterised in that** the voltage supplies (3, 4) have batteries (3, 4) and the electronic monitoring system (2), records the current, voltage and temperature patterns thereof, and has a circuit for optimal charging of the batteries (3, 4).

11. Electronic braking system according to one of the preceding claims, **characterised in that** the brake demand recording means (7, 8) are designed so that it can be reliably detected whether a fault is present that is impairing the functioning.

12. Electronic braking system according to claim 11, **characterised in that** it has a monitoring device (2) for each of the brake demand recording means (7, 8).

13. Electronic braking system according to one of the preceding claims, **characterised in that** a data transmission can be realised, in the event of a fault, via the power supply lines.

14. Electronic braking system according to claim 1, **characterised in that** the trailer control module is controlled electrically during normal operation via the central control unit (EBS-ECU) and, in the event of failure of the electronics, pneumatically via the stand-alone first brake circuit controller (5).

15. Electronic braking system according to one of the preceding claims, **characterised in that** the central control unit (EBS-ECU) can communicate with further electronic units via a CAN bus.

16. Electronic braking system according to one of the preceding claims, **characterised in that** the stand-alone first brake circuit controller (5) has its own ABS control.

17. Electronic braking system according to one of the preceding claims, **characterised in that** it has redundant data transmission lines.

18. Electronic braking system according to claim 17, **characterised in that** redundant data transmission lines are guided spatially separated from each other.

19. Electronic braking system according to one of the preceding claims, **characterised in that** at least one brake circuit has a redundant communication line to the central control unit (EBS-ECU).

20. Electronic braking system according to one of the preceding claims, **characterised in that** a direct data transmission line facilitates a redundant communication between the brake circuits.

21. Electronic braking system according to one of the preceding claims, **characterised in that** the central control unit (EBS-ECU) and / or the stand-alone first brake circuit controller (5) are constructed in such a way that they control the parking brake in response to an input of a parking brake signal.

22. Electronic braking system according to one of the preceding claims, **characterised in that** at least one brake circuit controller (5, EBS-ECU) is constructed in such a way that it applies the wheel brake, by means of the service brakes, in response to an input of a parking brake signal.

23. Electronic braking system according to claim 22,
**characterised in that** an additional controllable actuator can hold the wheel brake in the applied state.

24. Electronic braking system according to claim 23, **characterised in that** the additional actuator is controlled by the brake circuit controller (5, EBS-ECU) assigned to the corresponding wheel brake.

25. Electronic braking system according to claim 21 or 22, **characterised in that** at least one brake circuit controller (5, EBS-ECU) controls a valve, which for its part ventilates or deaerates spring-actuated brake cylinders.

26. Electronic braking system according to one of the preceding claims, **characterised in that** the brake circuit of the stand-alone first brake circuit controller (5) redundantly supplies the further brake circuits with voltage, and, in the event of a failure of the central control unit (EBS-ECU), the further brake circuits are controlled by the stand-alone first brake circuit controller (5).

27. Electronic braking system according to one of the preceding claims, **characterised in that** the central control unit (EBS-ECU) is integrated in a central on-board computer.

28. Electronic braking system according to one of the preceding claims, **characterised in that** it has an additional communication connection from the stand-alone first brake circuit controller (5) to other vehicle systems, in particular to a central on-board computer.

29. Electronic braking system according to one of the preceding claims, **characterised in that** the brake circuit of the stand-alone first brake circuit controller (5) acts on a front axle.

30. Electronic braking system according to one of the preceding claims, **characterised in that** ABS algorithms are integrated in the stand-alone first brake circuit controller (5).

## Revendications

1. Système électronique de freinage d'un véhicule, comprenant au moins deux circuits de frein, au moins un premier circuit de frein et un deuxième circuit de frein, une commande (5, EBS-ECU) étant affectée respectivement à un circuit de frein, et comprenant un appareil (EBS-ECU) de commande central de tous les circuits de frein, ainsi qu'une pédale (6) de frein ou un appareil de réception d'une demande de freinage équivalent, qui a deux moyens (7, 8) autonomes de réception de demande de freinage, dans lequel, si l'appareil (EBS-ECU) de commande central est défaillant ou s'il est détecté un disfonctionnement de l'appareil (EBS-ECU) de commande central, une première commande (5) de circuit de frein parmi les commandes (5, EBS-ECU) de circuit de frein peut, d'une manière indépendante de l'appareil (EBS-ECU) de commande central, prendre en charge la commande d'un circuit de frein,
**caractérisé en ce que** chacun des moyens de réception de demande de freinage est constitué sous la forme de capteurs doubles de déplacement, d'angle ou de force, ou sous la forme de capteurs individuels de déplacement ou d'angle et d'un capteur de force et la première commande (5) autonome de circuit de frein est alimentée en énergie électrique, indépendamment de l'appareil (EBS-ECU) de commande central et **en ce qu'**un premier moyen (7) de réception de demande de freinage, parmi les deux moyens (7, 8) autonomes de réception de demande de freinage, est relié à l'appareil (EBS-ECU) de commande central, tandis qu'un deuxième moyen (8) de réception de demande freinage, parmi les deux moyens (7, 8) autonomes de réception de demande de freinage, est relié à la première commande (5) autonome de circuit de frein, la commande des circuits de frein s'effectuant en fonctionnement normal par l'appareil (EBS-ECU) de commande central et, si l'appareil (EBS-ECU) de commande central est défaillant ou s'il est détecté un disfonctionnement de l'appareil (EBS-ECU) de commande central, la première commande (5) autonome de circuit de frein traite directement les signaux du deuxième moyen (7, 8) intact de réception de demande de freinage pour le calcul de façon autonome de prescriptions de consigne pour la commande de son premier circuit de frein, le système électronique de freinage ayant un module de commande de remorque, qui est relié électriquement et/ou pneumatiquement d'une part à l'appareil (EBS-ECU) de commande central et d'autre part à la commande (5) autonome de circuit de frein.

2. Système électronique de freinage suivant la revendication 1, **caractérisé en ce que** l'appareil (EBS-ECU) de commande central effectue aussi la tâche de la commande du deuxième circuit de frein parmi les deux circuits de frein.

3. Système électronique de freinage suivant l'une des revendications précédentes, **caractérisé en ce qu'**il est constitué, en modules intelligents de régulation de la pression, des moyens, subordonnés à l'appareil (EBS-ECU) de commande central ou à la première commande (5) autonome de circuit de frein, de production de la pression de freinage.

4. Système électronique de freinage suivant la revendication 2, **caractérisé en ce que** la première commande (5) autonome de circuit de frein ainsi qu'un module de régulation de la pression associé à ce premier circuit de frein sont rassemblés en une unité de construction.

5. Système électronique de freinage suivant la revendication 4, **caractérisé en ce que** la première commande (5) autonome de circuit de frein ainsi qu'une commande intelligente du module de régulation de la pression, rassemblée avec elle en une unité de construction, est réalisée par un circuit électronique commun contenu également dans l'unité de construction.

6. Système électronique de freinage suivant l'une des revendications précédentes, **caractérisé en ce que** la première commande (5) autonome de circuit de frein est conçue de manière à se mettre hors circuit de soi-même (comportement fail-silent) dans le cadre d'un défaut portant atteinte au fonctionnement.

7. Système électronique de freinage suivant l'une des revendications précédentes, **caractérisé en ce qu'**une alimentation (3, 4) autonome en tension est associée à chaque circuit de frein.

8. Système électronique de freinage suivant la revendication 7, **caractérisé en ce que** chaque alimentation (3, 4) autonome en tension a une batterie (3, 4), qui alimente exclusivement le circuit de frein associé.

9. Système électronique de freinage suivant la revendication 7 ou 8, **caractérisé en ce que** l'état des alimentations (3, 4) en tension est contrôlé par une électronique (2) de contrôle.

10. Système électronique de freinage suivant la revendication 9, **caractérisé en ce que** les alimentations (3, 4) en tension ont des batteries (3, 4) et l'électronique (2) de commande enregistre leurs courbes de courant, de tension et de température et a un circuit pour charger au mieux les batteries (3, 4).

11. Système électronique de freinage suivant l'une des revendications précédentes, **caractérisé en ce que** les moyens (7, 8) de réception de demande de freinage sont conformés de manière à pouvoir détecter de façon sûre si il y a un défaut portant atteinte au fonctionnement.

12. Système électronique de freinage suivant la revendication 11, **caractérisé en ce qu'**il a un dispositif (2) de contrôle pour chacun des moyens (7, 8) de réception de demande de freinage.

13. Système électronique de freinage suivant l'une des revendications précédentes, **caractérisé en ce qu'**en cas de défaillance, une transmission de données peut s'effectuer par les lignes d'alimentation en courant.

14. Système électronique de freinage suivant la revendication 1, **caractérisé en ce que** le module de contrôle de remorque est commandé, en fonctionnement normal, électriquement par l'appareil (EBS-ECU) de commande central et, s'il y a une défaillance de l'électronique, pneumatiquement par la première commande (5) autonome de circuit de frein.

15. Système électronique de freinage suivant l'une des revendications précédentes, **caractérisé en ce que** l'appareil (EBS-ECU) de commande central peut communiquer avec d'autres appareils électroniques par un bus CAN.

16. Système électronique de freinage suivant l'une des revendications précédentes, **caractérisé en ce que** la première commande (5) autonome de circuit de frein a une régulation ABS propre.

17. Système électronique de freinage suivant l'une des revendications précédentes, **caractérisé en ce qu'**il a des lignes redondantes de transmission de données.

18. Système électronique de freinage suivant la revendication 17, **caractérisé en ce que** les lignes redondantes de transmission de données passent dans l'espace séparément les unes des autres.

19. Système électronique de freinage suivant l'une des revendications précédentes, **caractérisé en ce qu'**au moins un circuit de frein a une ligne de communication redondante allant à l'appareil (EBS-ECU) de commande central.

20. Système électronique de freinage suivant l'une des revendications précédentes, **caractérisé en ce qu'**une ligne de transmission de données entre les circuits de frein rend possible une communication redondante.

21. Système électronique de freinage suivant l'une des revendications précédentes, **caractérisé en ce que** l'appareil (EBS-ECU) de commande central et/ou la première commande (5) autonome de circuit de frein sont constitués de manière à commander le frein de stationnement à la réception d'un signal de frein de stationnement.

22. Système électronique de freinage suivant l'une des revendications précédentes, **caractérisé en ce qu'**au moins une commande (5, EBS-ECU) des circuits de frein est constituée de manière à serrer les freins de roue au moyen des freins de service à la réception d'un signal de frein de stationnement.

23. Système électronique de freinage suivant la revendication 22, **caractérisé en ce qu'**un actionneur supplémentaire, pouvant être commandé, peut maintenir les freins de roue à l'état serré.

24. Système électronique de freinage suivant la revendication 23, **caractérisé en ce que** l'actionneur supplémentaire est commandé par la commande (5, EBS-ECU) de circuit de frein associée au frein de roue correspondant.

25. Système électronique de freinage suivant la revendication 21 ou 22, **caractérisé en ce qu'**au moins une commande (5, EBS-ECU) de circuit de frein commande une soupape, qui, pour sa part, alimente en air ou purge un cylindre de frein à ressort accumulateur.

26. Système électronique de freinage suivant l'une des revendications précédentes, **caractérisé en ce que** le circuit de frein de la première commande (5) autonome, de circuit de frein alimente, de manière redondante en tension, les autres circuits de frein et, si l'appareil (EBS-ECU) de commande central est défaillant, les autres circuits de frein sont commandés par la première commande (5) autonome de circuit de frein.

27. Système électronique de freinage suivant l'une des revendications précédentes, **caractérisé en ce que** l'appareil (EBS-ECU) de commande central est intégré dans un ordinateur de bord central.

28. Système électronique de freinage suivant l'une des revendications précédentes, **caractérisé en ce qu'**il a une liaison de communication supplémentaire de la première commande (5) autonome de circuit de frein à d'autres systèmes du véhicule, notamment à un ordinateur de bord central.

29. Système électronique de freinage suivant l'une des revendications précédentes, **caractérisé en ce que** le circuit de frein de la première commande (5) autonome de circuit de frein agit sur un essieu avant.

30. Système électronique de freinage suivant l'une des revendications précédentes, **caractérisé en ce que** des algorithmes ABS sont intégrés dans la première commande (5) autonome de circuit de frein.
